Europäisches Patentamt

European Patent Office

Office européen des brevets

(19)

(11) **EP 0 863 409 B1**

(12) **FASCICULE DE BREVET EUROPEEN**

(45) Date de publication et mention
de la délivrance du brevet:
**04.08.2004 Bulletin 2004/32**

(51) Int Cl.⁷: **G01S 13/58**, G01S 13/34

(21) Numéro de dépôt: **98400478.8**

(22) Date de dépôt: **27.02.1998**

(54) **Procédé et dispositif de détection radar à modulation de fréquence à onde continue présentant une levée d'ambiguité entre la distance et la vitesse**

Verfahren und Vorrichtung für dauerstrichfrequenzmodulierte Radardetektion mit Mehrdeutigkeitsauflösung zwischen Entfernung und Geschwindigkeit

Method and device for continuous wave frequency modulation radar detection with range-velocity ambiguity resolution

(84) Etats contractants désignés:
**BE DE ES FR GB IT SE**

(30) Priorité: **04.03.1997 FR 9702546**

(43) Date de publication de la demande:
**09.09.1998 Bulletin 1998/37**

(73) Titulaire: **Thales**
**75008 Paris (FR)**

(72) Inventeurs:
• **Kemkemian, Stéphane**
**94117 Arcueil Cedex (FR)**
• **Lacomme, Philippe**
**94117 Arcueil Cedex (FR)**

(56) Documents cités:
**EP-A- 0 561 690**          **EP-A- 0 730 166**
**WO-A-96/14590**

EP 0 863 409 B1

**Description**

La présente invention concerne un procédé et un dispositif de détection radar à modulation de fréquence à onde continue présentant une levée d'ambiguïté entre la distance et la vitesse. Elle s'applique notamment à des radars pour automobiles évoluant dans un environnement multi-cibles, dans le cas par exemple où les cibles présentes sont relativement groupées.

Il est connu de prévoir d'équiper des automobiles par des radars pour la régulation du trafic routier, ces derniers effectuant notamment des fonctions de régulation de vitesse ou de détection d'obstacles. Un radar de régulation de vitesse pour véhicule automobile a pour fonction notamment de détecter la distance et la vitesse entre un véhicule porteur et le véhicule le précédant, cela pour permettre au véhicule porteur de régler sa vitesse par rapport à celle du véhicule précédent, pour répondre par exemple à des critères de sécurité. Un tel radar évolue essentiellement en environnement multi-cibles. Par ailleurs, les cibles présentes sont relativement groupées :

- soit autour d'une certaine vitesse avec des distances quelconques, notamment lorsque des véhicules cibles se suivent sur une file d'attente de circulation ou lorsque les cibles détectées correspondent en fait à des échos de sol ;
- soit autour d'une certaine distance avec des vitesses diverses, notamment en cas de dépassement d'un véhicule par un autre.

Un radar à modulation de fréquence et à onde continue noté par la suite radar FM-CW consistant dans sa version simple à moduler linéairement en fréquence sur une bande donnée l'onde continue, il est connu, dans le cas où seulement une seule cible peut être illuminée à un instant donné, de lever l'ambiguïté entre la distance et la vitesse en alternant des rampes de modulation de fréquence de pentes opposées. Dans certaines situations multi-cibles, une troisième rampe de fréquence est utilisée, généralement de pente nulle, puis enfin une quatrième séquence peut être nécessaire pour lever le doute.

Cette solution comporte d'importants inconvénients, notamment les inconvénients suivants :

- La sensibilité du radar est réduite pour deux principales raisons :

  - le temps d'observation de la cible doit être partagé en trois ou quatre intervalles d'intégration ;
  - la cible doit être détectée à chacune des séquences.

- Il peut subsister des levées d'ambiguïté erronées, ce qui crée en fait des plots "fantômes", d'autant plus que la résolution en fréquence est réduite par la partition du temps d'observation des cibles.

Le but de l'invention est notamment de pallier les inconvénients précités, en permettant de lever l'ambiguïté entre la distance et la vitesse en réduisant le nombre de rampes de fréquences nécessaires. A cet effet, l'invention a pour objet un procédé de détection radar à modulation de fréquence à onde continue présentant une levée d'ambiguïté entre la distance et la vitesse, caractérisé en ce que le radar émet au moins alternativement deux rampes parallèles et discontinues de modulation de fréquence légèrement décalées, la fréquence commutant d'une rampe à l'autre à la fin d'une durée donnée, la distance d'une cible détectée étant estimée en fonction de la différence de phase entre un signal reçu correspondant à la première rampe et un signal reçu correspondant à la deuxième rampe, la vitesse de la cible étant obtenue à partir de la distance estimée et de la droite d'ambiguïté associée à la cible.

L'invention a également pour objet un dispositif pour la mise en oeuvre du procédé.

L'invention a pour principaux avantages qu'elle ne pose pas un problème d'association erronée en contexte multi-cible, qu'elle permet de bonnes précision de mesures, qu'elle peut opérer sur un large domaine d'application, qu'elle est économique et qu'elle est simple à mettre en oeuvre.

D'autres caractéristiques et avantages de l'invention apparaîtront à l'aide de la description qui suit faite en regard de dessins annexés qui représentent :

- la figure 1, une illustration du principe de fonctionnement d'un radar FM-CW à modulation linéaire ;
- la figure 2, dans le plan Distance-Vitesse un exemple de situation multi-cibles selon l'art antérieur ;
- la figure 3, une illustration du procédé de détection radar selon l'invention par une représentation dans le plan Fréquence-Temps de la modulation de fréquence émise ;
- la figure 4, une illustration du procédé selon l'invention par une représentation dans le plan Distance-Vitesse;
- la figure 5, un exemple d'amélioration possible de la précision du procédé selon l'invention ;
- les figures 6a et 6b, des illustrations respectivement des domaines de fonctionnement d'un radar opérant selon l'art antérieur et d'un radar opérant selon l'invention ;
- la figure 7, un mode de réalisation possible d'un dispositif pour la mise en oeuvre du procédé selon l'invention.

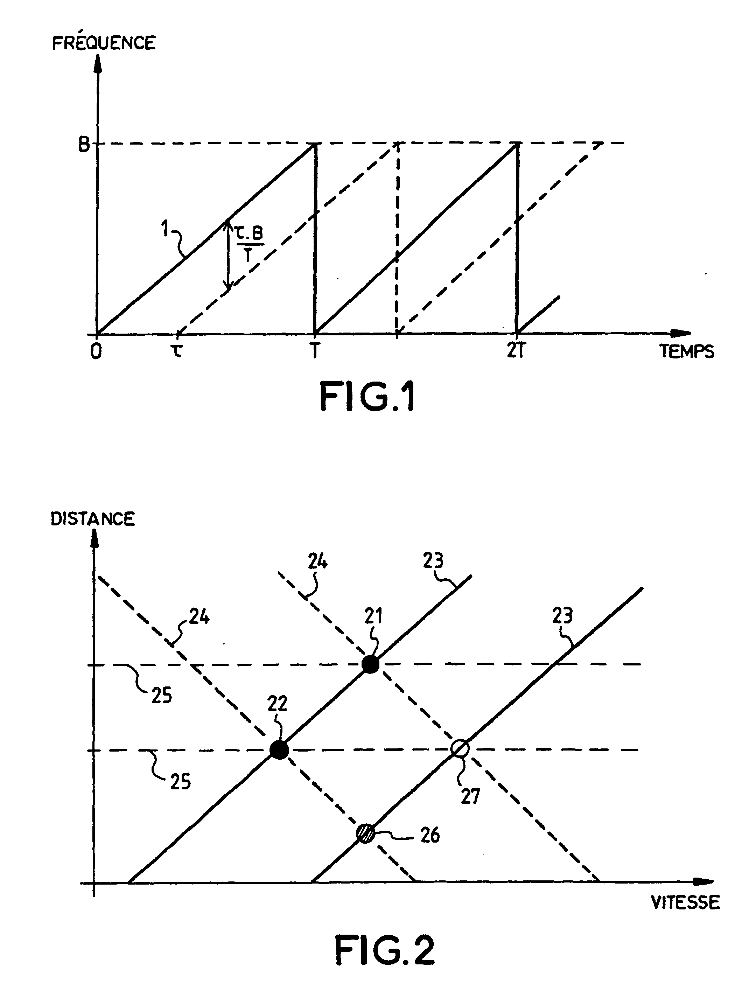

La figure 1 illustre le principe de fonctionnement d'un radar FM-CW par un exemple à modulation linéaire 1 de la fréquence dans une bande B donnée. Cette modulation est représentée par une rampe de pente donnée se répétant selon une période T sur toute la bande B de fréquence. Le principe du radar FM-CW, dans sa version la plus simple, consiste à moduler linéairement en fréquence sur une bande B donnée une onde continue issue d'un générateur de signal. Cette onde sert en même temps à l'émission et comme oscillateur local à la réception. Le signal de battement reçu est, sur un intervalle de temps inférieur ou égal à la période T de la modulation 1, un signal sinusoïdal de fréquence notée f. Dans le cas d'une cible immobile située à une distance D du radar, la fréquence de battement f est donnée par la relation suivante :

$$f = -B\frac{\tau}{T} = \frac{-2DB}{CT} \tag{1}$$

où, B et T ayant été définis précédemment, C représente la vitesse de la lumière et $\tau$ la durée de propagation aller-retour de la cible au radar.

Si la cible est animée d'une vitesse relative $V_r$ par rapport au radar, la fréquence précédente, compte tenu de l'effet Doppler, devient :

$$f = \frac{-2DB}{CT} + \frac{2Vr}{\lambda} \tag{2}$$

où, $\lambda$ représente la longueur d'onde du signal émis par le radar, ce signal ayant une fréquence d'environ 76 Ghz notamment dans le cas d'une application automobile.

L'analyse spectrale du signal de battement sur la durée maximale correspondant à la période T précitée, permet d'obtenir une résolution en fréquence $\delta f = \frac{1}{T}$. Si la vitesse relative $V_r$ de la cible est connue a priori, la relation (2) fournit alors sans ambiguïté la distance de la cible avec une résolution en distance définie par la relation suivante :

$$\delta D = \frac{C}{2B} \tag{3}$$

Réciproquement, si la distance D est connue, la vitesse est obtenue sans ambiguïté selon la relation suivante :

$$\delta V_r = \frac{\lambda}{2T} \tag{4}$$

Dans le cas général, il y a ambiguïté entre la distance et la vitesse. Un signal de battement à la fréquence f peut être créé par toute cible dont la distance D et la vitesse $V_r$ vérifient la relation suivante :

$$f - \frac{\delta f}{2} < \frac{-2DB}{CT} + \frac{2V_r}{\lambda} < f + \frac{\delta f}{2} \tag{5}$$

Dans un plan Distance-Vitesse ce lieu d'ambiguïté est matérialisé par une droite. Dans le cas où seulement une cible peut être illuminée à un instant donné, la levée d'ambiguïté entre la distance et la vitesse s'effectue classiquement en alternant des rampes de modulation de fréquence de pentes opposées et en résolvant le système d'équations suivant :

$$\bullet \quad \frac{-2DB}{CT} + \frac{2V_r}{\lambda} = f_1 \tag{6}$$

$$\bullet \quad \frac{+2DB}{CT} + \frac{2V_r}{\lambda} = f_2 \tag{7}$$

où $f_1$ et $f_2$ représentent les fréquences des signaux de battement reçus.

La relation (6) correspond à une pente montante et la relation (7) correspondant à une pente descendante. Lorsqu'il y a un nombre N de cibles supérieur ou égal à deux, le problème se complique car chaque rampe donne lieu à N droites. Il existe en conséquence $N^2$ intersections, donc $N^2$ associations possibles. La solution couramment utilisée consiste à rajouter une troisième rampe, dont la pente est généralement choisie nulle. La figure 2 présente dans le plan Distance-Vitesse un exemple de situation multi-cibles où cette troisième rampe s'avère insuffisante. Le nombre de cibles réelles est ici, à titre d'exemple égal à deux, ces cibles vérifiant par exemple le système d'équations des relations (6) et (7). Les positions des deux cibles dans le plan précité sont représentées par deux points d'intersection 21,22 alors qu'il y a au total quatre intersections possibles 21,22,26,27. En effet, ces deux points 21,22 sont à des intersections de deux droites 23 de pente montante et de deux droites 24 de pente descendante. Des droites 25 de pente nulle permettent de lever une ambiguïté avec une première intersection représentée par un point hachuré 26 mais ne permettent pas de lever l'ambiguïté avec une autre intersection représentée par un point vide 27. Une solution connue pour lever cette ambiguïté nécessite alors d'utiliser une quatrième séquence qui n'est d'ailleurs pas obligatoirement une rampe de modulation de fréquence. Cette solution présente toutefois les inconvénients exposés précédemment. Un premier inconvénient réside notamment dans l'existence d'une sensibilité réduite du radar car d'une part le temps d'observation de la cible doit être partagé en trois ou quatre intervalles d'intégration et d'autre part la cible doit être détectée dans chacune des séquences. Un deuxième inconvénient consiste par ailleurs dans le fait qu'il peut subsister des levées d'ambiguïté erronées, d'autant plus que la résolution en fréquence est réduite par la partition du temps d'observation des cibles.

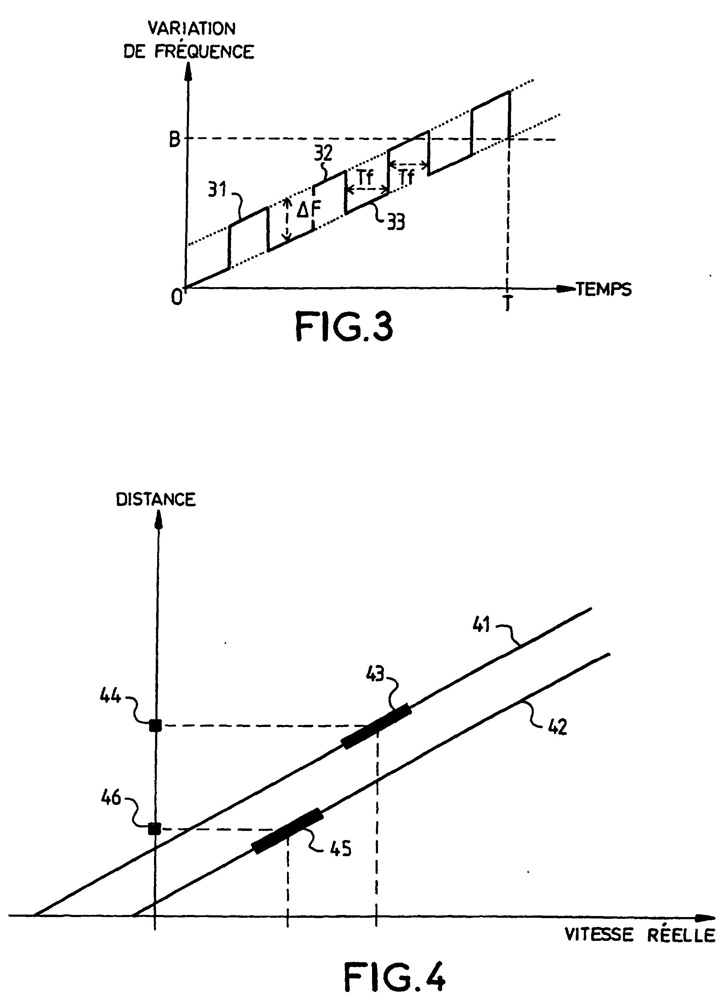

La figure 3 illustre le procédé de détection radar selon l'invention par une représentation dans le plan Fréquence-Temps de la modulation 31 de fréquence émise. Selon l'invention le radar émet alternativement pendant une durée Tf deux rampes 32,33 parallèles et discontinues de modulation de fréquence sur une bande B légèrement décalées d'une variation de fréquence $\Delta F$. La fréquence de commutation 1/2Tf entre l'une ou l'autre rampe détermine l'ambiguïté en fréquence de la forme d'onde.

En supposant que l'on prélève deux échantillons $S_1(t)$ et $S_2(t)$ du signal reçu d'une cible située, à l'origine des temps, à la distance D et de vitesse relative $V_r$ , alors à un instant t le retard $\tau$ de propagation des signaux radar est donné par la relation suivante, l'origine des temps étant le début de la première rampe :

$$\tau = \frac{2(D - V_r t)}{C} \tag{8}$$

- Le premier signal $S_1(t)$ correspondant à la première rampe au temps t dans un $k^{\text{ième}}$ cycle de commutation de rampe, soit $2kTf \le t < (2k+1)Tf$ ;
- et le deuxième signal $S_2(t)$ correspondant à la seconde rampe au temps t+Tf, t appartenant toujours au $k^{\text{ième}}$ cycle de commutation ;

la fréquence instantanée et la valeur du signal émis sur la première rampe au temps t sont alors respectivement données par les relations suivantes :

$$f_1(t) = F_0 + \frac{Bt}{T} \tag{9}$$

$$S_{e1}(t) = Exp\left[2\pi j(F_0 t + \frac{Bt^2}{2T}) + \varphi_{k1}\right] \tag{10}$$

la fréquence instantanée et la valeur du signal émis sur la deuxième rampe au temps t+Tf sont alors respectivement données par les relations suivantes :

$$f_2(t + Tf) = F_0 + \frac{Bt}{T} + \frac{BTf}{T} + \Delta F \tag{11}$$

$$S_{e2}(t + Tf) = Exp\left[2\pi j(F_0 t + \frac{B(t + Tf)^2}{2T} + \Delta F(t + Tf)) + \varphi_{k2}\right] \tag{12}$$

$F_0$ représente la fréquence de base des signaux émis par le radar, en l'absence de toute modulation, comme il a été vu précédemment B représente la bande d'excursion en fréquence c'est à dire en fait l'amplitude des rampes, $\varphi_{k1}$ et $\varphi_{k2}$ représentent les phases à l'origine de chaque cycle de commutation. $\varphi_{k1}$ et $\varphi_{k2}$ sont indéterminés si la cohérence de phase n'est pas assurée de cycle à cycle. Concernant la cohérence de phase, il est à noter que tant que la distance de la cible est inférieure à la pseudo ambiguïté distance CT/2 , la cohérence de phase n'est nécessaire qu'à l'intérieur d'un intervalle de rampe de durée égale à la période de répétition T des rampes. En particulier, la phase à l'origine de chacune de ces périodes ou intervalles de durée T peut être quelconque puisque le signal d'oscillation local à la réception est identique à celui transmis, à un décalage temporel et à l'effet Doppler près. La cohérence sur plusieurs intervalles d'une rampe n'est nécessaire que si la distance d'une cible est supérieure à la pseudo ambiguïté précédente.

Puisqu'un signal reçu à l'instant t provient d'une émission à l'instant t-τ, les signaux de battement $S_1(t)$ et $S_2$(t) vérifient alors les relations suivantes :

$$S_1(t) = S_{e1}(t - \tau)S_{e1}(t) \qquad (13)$$

$$S_2(t + Tf) = S_{e2}(t + Tf - \tau)S_{e2}(t + Tf) \qquad (14)$$

Si $\tau < Tf$, les termes de phase à l'origine s'éliminent et on obtient :

$$S_1(t) = Exp\left[2\pi j\left(-F_0\tau + \frac{B\tau^2}{2T} - \frac{Bt\tau}{T}\right)\right] \qquad (15)$$

$$S_2(t + Tf) = S_1(t)Exp\left[-2\pi j\left(\Delta F + B\frac{Tf}{T}\right)\tau\right] \qquad (16)$$

La phase différentielle $\Delta\varphi = \varphi[S_1(t)]-\varphi[S_2(t + Tf)]$ vaut :

$$\Delta\varphi = 4\pi\left(\Delta F + B\frac{Tf}{T}\right)\left(\frac{D - V_r t}{C}\right) \qquad (17)$$

Le terme proportionnel au temps $V_r$t de la relation (17) correspond à la légère variation de distance de la cible durant le temps total de la rampe de fréquence. Il est généralement négligeable, en conséquence la phase différentielle $\Delta\varphi$ entre les deux signaux $S_1(t)$ et $S_2(t)$ est approximativement donnée par la relation suivante :

$$\Delta\varphi = 4\pi\left(\Delta F + B\frac{Tf}{T}\right)\left(\frac{D}{C}\right) \qquad (18)$$

La phase différentielle entre les signaux $S_1(t)$ et $S_2(t)$ est donc pratiquement indépendante de la vitesse de la cible. Elle permet donc une mesure directe de la distance de la cible. La mesure de cette phase différentielle permet donc en fait une pré-estimation de la distance D de la cible au radar définie par la relation suivante :

$$D = \frac{\Delta\varphi}{4\pi} \times \frac{C}{\left(\Delta F + B\frac{Tf}{T}\right)} \qquad (19)$$

Cette mesure est ambiguë à $2\pi$ près, ce qui correspond, en prenant $\Delta\varphi$ égale à $2\pi$ à une distance d'ambiguïté $D_{2\pi}$ définie selon la relation suivante :

$$D_{2\pi} = \frac{C}{2\left(\Delta F + B\frac{Tf}{T}\right)} \qquad (20)$$

En notant R les rapports signal sur bruit de $S_1(t)$ ou $S_2(t)$ supposés de même niveau, la mesure de phase différentielle est affectée d'une erreur dont l'écart type $\sigma_\varphi$ est approximativement donné par la relation suivante :

$$\sigma_\varphi = \frac{1}{\sqrt{R}} \qquad (21)$$

La distance déduite de cette mesure de phase différentielle est ainsi affectée d'une erreur dont l'écart type est $_D = D_{2\pi}\sigma_\varphi$, soit approximativement :

$$\sigma_D = \frac{C}{4\pi\left(\Delta F + B\frac{Tf}{T}\right)\sqrt{R}} \qquad (22)$$

Généralement $\Delta F$ est très supérieur à $B\frac{Tf}{T}$, d'où :

$$\sigma_D = \frac{C}{4\pi\Delta F\sqrt{R}} \qquad (23)$$

Dans la mesure du possible, il est préférable de chercher à ce que la précision de la pré-estimation de la distance soit du même ordre de grandeur, voire meilleure que la résolution en distance fournie par la relation (2), c'est à dire de telle sorte que :

$$R > \left(\frac{B}{2\pi\Delta F}\right)^2 \qquad (24)$$

Simultanément, un traitement classique du radar FM-CW permet d'extraire pour chaque cible une droite d'ambiguïté dans le plan Distance-Vitesse. Si toutes les cibles sont situées en deçà de l'ambiguïté de la pré-estimation de distance, c'est-à-dire en fait en deçà de la distance d'ambiguïté $D_{2\pi}$ définie précédemment, il suffit de reporter la pré-estimation de distance obtenue par la mesure de phase différentielle sur la droite d'ambiguïté associée pour lever l'ambiguïté entre la distance et la vitesse et cela quel que soit le nombre de droites d'ambiguïté, c'est-à-dire quel que soit le nombre de cibles résolues. En effet, chaque raie spectrale obtenue après analyse d'un signal de battement et correspondant à une détection induit une droite d'ambiguïté dans le plan Distance-Vitesse et permet une mesure de phase différentielle, cette dernière conduisant à la pré-estimation de distance. L'association d'une droite et d'une mesure de phase différentielle est donc implicite.

La figure 4 illustre le principe précédent du procédé selon l'invention. Cette figure présente un cas de détection appliqué à deux cibles par exemple celles de la figure 2. Le traitement radar a permis dans une première étape d'extraire pour une première cible une première droite d'ambiguïté 41 dans le plan Distance-Vitesse et pour une deuxième cible une deuxième droite d'ambiguïté 42. Les cibles sont supposées être toutes situées en deçà de la distance d'ambiguïté $D_{2\pi}$ définie précédemment. La pré-estimation de distance 44 obtenue par la mesure de phase différentielle permet dans une deuxième étape de lever l'ambiguïté entre la distance et la vitesse sur la droite d'ambiguïté 41. De même, la pré-estimation de distance 46 obtenue par la mesure de phase différentielle permet dans cette deuxième étape de lever l'ambiguïté entre la distance et la vitesse sur la deuxième droite d'ambiguïté 42. Des zones d'incertitude de mesure 43, 45 situées sur les droites d'ambiguïté et positionnées autour des pré-estimations de distance demeurent sur les droites d'ambiguïté, d'où une erreur $\sigma_{Vr}$ sur la vitesse.

De la relation (2), il s'ensuit donc que la vitesse d'une cible est donnée par la relation suivante, équation de la droite d'ambiguïté associée à la distance D :

$$V_r = \frac{\lambda}{2} f + \frac{BD\lambda}{CT} \qquad (25)$$

En utilisant les pseudo résolutions en distance et en vitesse obtenues conformément aux relations (3) et (4), D étant la distance pré-estimée, il vient :

$$V_r = \frac{\lambda}{2} f + D \frac{\delta Vr}{\delta D} \qquad 26$$

Si des cibles peuvent se trouver au delà de la distance d'ambiguïté $D_{2\pi}$ il est nécessaire de lever préalablement l'ambiguïté de la pré-estimation avant d'appliquer les étapes décrites relativement à la figure 4.

Un radar FM-CW ne possède pas de réelle résolution dans les deux dimensions, distance et vitesse. La précision en distance est celle de la pré-estimation de distance donnée par la relation (23). La précision en vitesse se déduit de la relation (26). Dans le meilleur des cas, où le bruit sur la pré-estimation de distance est nul, la précision en vitesse est limitée par la résolution spectrale. Dans les autres cas, l'erreur de distance $\sigma_D$ et l'erreur de vitesse $\sigma_{Vr}$ vérifient les relations suivantes :

$$\sigma_{Vr}^2 = \sigma_{0\_Vr}^2 + \left(\frac{\delta Vr}{\delta D}\right)^2 \sigma_D^2 \qquad (27)$$

. $\sigma_{0\_Vr}^2$ étant la précision de vitesse limitée seulement par la résolution spectrale.

La relation (27) peut aussi s'écrire :

$$\sigma_{Vr}^2 = \sigma_{0\_Vr}^2 + \delta V_r^2 \frac{B^2}{(2\pi\Delta F)^2 R} \qquad (28)$$

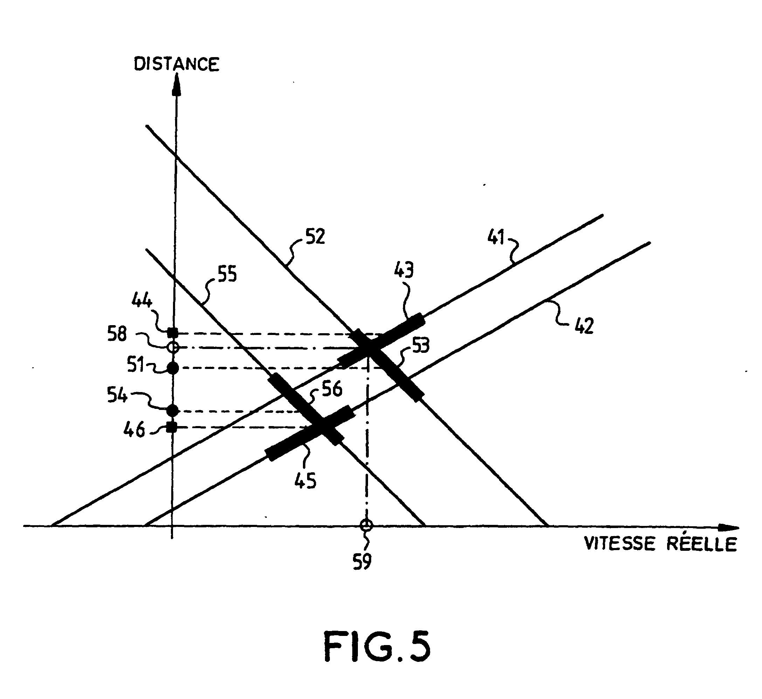

Selon l'invention, une amélioration de la précision de mesure, notamment lorsque le rapport signal sur bruit est faible, est obtenue en émettant une séquence de doubles rampes montantes de modulation commutées alternativement espacées de $\Delta F$, puis une séquence de doubles rampes descendantes de modulation commutées alternativement espacées de la même variation de fréquence $\Delta F$. La pré-estimation de distance permet de sélectionner, pour chaque sens de rampes, des zones réduites sur chaque droite d'ambiguïté, sélectionnées par exemple pour des distances comprises à $\pm 2\sigma$ autour de la distance mesurée par la phase différentielle, $\sigma$ représentant par exemple l'erreur sur la distance. Les véritables distances et vitesses sont ensuite obtenues en recherchant les intersections des zones présélectionnées. Cette amélioration n'est applicable que si les intersections des zones ne sont pas ambiguës. La figure 5 illustre cette amélioration dans le plan Distance-Vitesse de la figure 4 et avec les deux mêmes cibles en jeu. Comme il a été vu précédemment pour une première cible, une première pré-estimation de distance 44 obtenue à partir d'une séquence de doubles rampes montantes puis associée à une droite d'ambiguïté 41 permet de déduire la vitesse réelle de la cible mais à une incertitude 43 près. L'amélioration est effectuée en déterminant une deuxième distance pré-estimée 51 comprise à $\pm 2\sigma$ autour de la première distance 44 pré-estimée. A la cible est associée une droite d'ambiguïté descendante 52 et sur cette droite une zone d'incertitude 53. L'intersection des deux zones d'incertitude 43,53, en fait des deux zones sélectionnées, donne la distance 58 et la vitesse 59 recherchées. Pour la deuxième cible, l'intersection de deux zones réduites 45,56 sur les droites d'ambiguïté 42,55 correspondant aux rampes montantes et descendantes et obtenues à partir des distances estimées 46,54 pour ces mêmes rampes donne aussi les coordonnées recherchées.

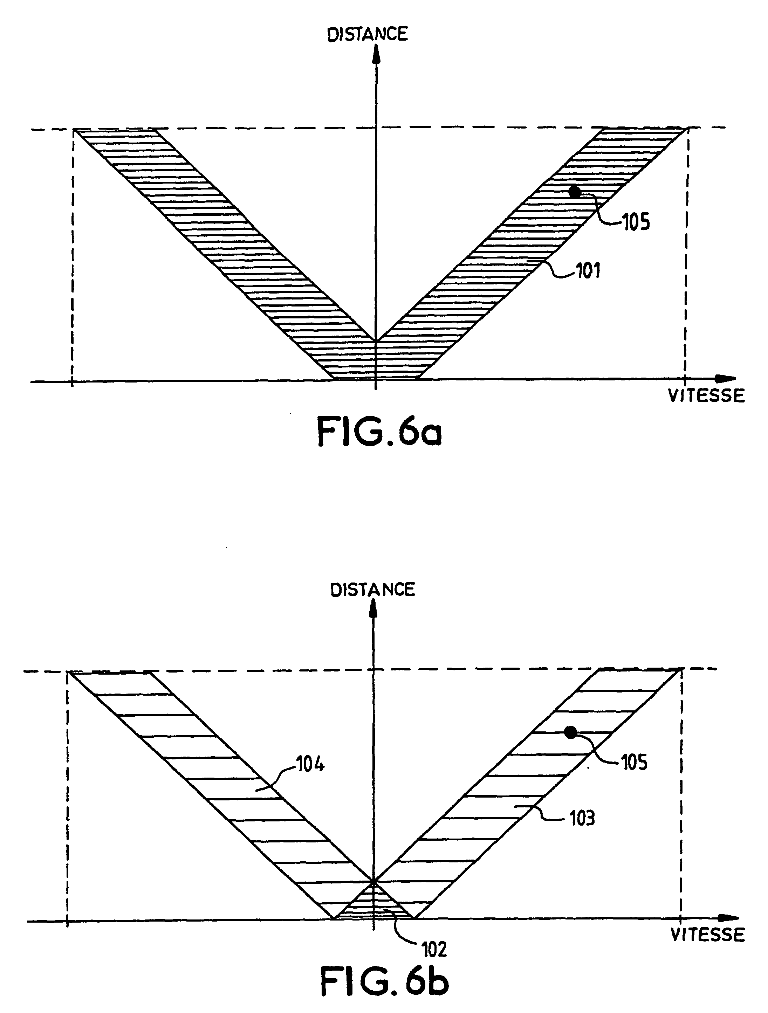

La levée d'ambiguïté selon l'invention entre la distance et la vitesse peut fonctionner sur plusieurs rampes de pentes différentes. En utilisant au moins deux groupes de rampes, par exemple de pentes opposées, et en basant l'extraction de la distance sur l'une ou l'autre des détections élémentaires obtenues à l'issue des deux groupes, il est possible d'accroître le domaine d'application du procédé selon l'invention dans le plan Distance-Vitesse, en réduisant la zone aveugle. La distance de la cible est en fait obtenue par une relation logique de type « ou » entre les détections élémentaires. Il est possible par exemple d'extraire la distance en se basant alternativement sur l'un ou l'autre groupe. Les figures 6a et 6b illustrent cet avantage de l'invention. La figure 6a présente dans le plan Distance-Vitesse la zone aveugle d'un radar à levée d'ambiguïté selon l'art antérieur, dans le meilleurs des cas. Cette zone 101 représente une bande située autour des droites d'ambiguïté de fréquences de battement situées autour de zéro. La figure 6b montre que la zone aveugle 102 d'un radar selon l'invention est limitée à l'intersection de deux bandes 103, 104 situées autour des droites d'ambiguïté de fréquences proches de zéro. Chaque bande correspond à un groupe de rampes. Ainsi, en extrayant la distance en se basant par exemple alternativement sur l'un des deux groupes de rampes, une cible 105 située dans la zone aveugle d'un radar selon l'art antérieur, en dehors de l'intersection des deux bandes 103, 104 précitées, peut être détectée au moins une fois sur deux avec un radar selon l'invention. Les cibles détectées doublement sont par exemple traitées selon l'amélioration relative à la figure 5, les cibles détectées sur un seul groupe de rampes étant par exemple localisées selon la méthode relative à la figure 4.

Le procédé selon l'invention peut être généralisé à l'utilisation de N rampes de modulation de fréquence commutées légèrement décalées en fréquence les unes par rapport aux autres. Deux signaux composites sont formés par deux combinaisons linéaires distinctes des signaux reçus associés aux N rampes après par exemple compensation des retards dus à la non simultanéité des rampes. La pré-estimation de distance est déduite de la mesure de phase différentielle entre les deux signaux composites. Dans le cas où N = 4, un premier signal composite peut par exemple être obtenu en retranchant le premier signal reçu S1 au deuxième signal reçu S2, soit S2-S1, et un deuxième signal composite peut par exemple être obtenu en retranchant le troisième signal reçu S3 au quatrième signal reçu S4. Toutes combinaisons permettant par exemple de synthétiser des fonctions de transfert données sont envisageables. En tout état de cause, selon l'invention le nombre de rampes commutées n'est pas limitée à deux.

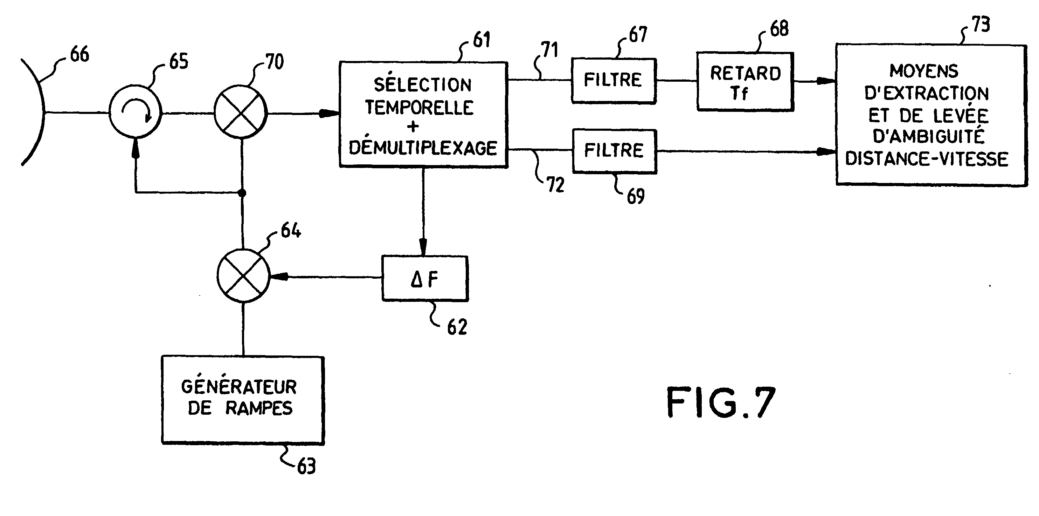

La figure 7 illustre un mode de réalisation possible d'un dispositif pour la mise en oeuvre du procédé selon l'invention. Des moyens 61 de sélection temporelle et de démultiplexage commandent par exemple un générateur de fréquence 62 délivrant la fréquence $\Delta F$ précitée et une fréquence nulle alternativement chacune pendant la durée Tf précitée. La fréquence délivrée est ajoutée à la fréquence fournie par un générateur de rampe de fréquences 63 via un premier mélangeur 64 de façon à décaler alternativement la rampe de fréquence de $\Delta F$ conformément à la figure 3. La double rampe commutée est émise via un circulateur hyperfréquence 65, des moyens d'amplification non représentés et une antenne 66 vers des cibles potentielles. Des moyens de réception non représentés sont par exemple reliés à l'entrée/sortie du circulateur. Les signaux sont reçus via le circulateur 65 et un deuxième mélangeur 70 dont une entrée est reliée au circulateur et l'autre entrée est reliée à la sortie du premier mélangeur, la sortie du deuxième mélangeur étant reliée à l'entrée des moyens 61 de sélection temporelle et de démultiplexage. Les moyens 61 de sélection temporelle et de démultiplexage aiguillent le signal reçu alternativement vers deux voies de telle sorte que le signal reçu provenant de la première rampe soit appliqué à une première voie 71 et que le signal reçu provenant de la seconde rampe décalée de $\Delta F$ soit appliqué à la seconde voie 72. Des filtres 67,69 sont par exemple disposés dans chaque voie 71, 72. Le signal présent dans la première voie est retardé de Tf pour tenir compte notamment de la non simultanéité de l'émission des deux rampes. En effet, à un instant donné d'échantillonnage un signal reçu ne correspond qu'à une seule rampe. Pour obtenir un échantillonnage simultané des deux signaux correspondant aux deux rampes, il est nécessaire de retarder un des deux, notamment de la période Tf de commutation des rampes. A cet effet, des moyens de retard 68 Tf sont par exemple placés en sortie du filtre 67. Une autre solution peut par exemple consister à mémoriser un des deux signaux au niveau des moyens 61 de sélection temporelle et de démultiplexage.

Les signaux reçus sur les deux voies sont pris en compte par des moyens 73 d'extraction et de levée d'ambiguïté entre la distance et la vitesse. Ces moyens 73 déterminent la phase différentielle $\Delta\varphi$ entre les signaux reçus sur chaque voie, et calculent la distance pré-estimée selon la relation (20). Les équations des droites d'ambiguïté étant par exemple mémorisées dans ces moyens 73, ces derniers peuvent déduire les vitesses des cibles soit conformément aux opérations illustrées par la figure 4, soit conformément à celles illustrées par la figure 5. Dans ce dernier cas, le générateur de rampe 63 est par exemple commandé pour fournir des rampes différentes, notamment de pentes opposées. Les moyens 71 d'extraction et de levée d'ambiguïté entre la distance et la vitesse comportent par exemple des interfaces, des processeurs et des mémoires utilisés par ailleurs dans le traitement radar et ne nécessitent donc pas de circuits supplémentaires. Le dispositif selon l'invention illustré à titre d'exemple par la figure 6 montre notamment que cette dernière est simple à mettre en oeuvre et qu'elle est économique dans la mesure en particulier où elle ne nécessite pas de composants ou de réalisation complexes, ce qui est notamment important pour des applications automobiles.

**Revendications**

1. Procédé de détection radar à modulation de fréquence à onde continue présentant une levée d'ambiguïté entre la distance et la vitesse, **caractérisé en ce que** le radar émet au moins alternativement deux rampes (32, 33) parallèles et discontinues de modulation de fréquence légèrement décalée d'une variation de fréquence ($\Delta F$), la fréquence commutant d'une rampe à l'autre à la fin d'une durée donnée (Tf), la distance (44, 46) d'une cible détectée étant estimée en fonction de la différence de phase ($\Delta\varphi$) entre un signal reçu ($S_1(t)$) correspondant à la première rampe (32) et un signal reçu ($S_2(t)$) correspondant à la deuxième rampe (33), la vitesse de la cible étant obtenue à partir de la distance estimée (44, 46) et de la droite d'ambiguïté (41,42) associée à la cible.

2. Procédé selon la revendication 1, **caractérisé en ce que** la distance estimée D (44, 46) est donnée par la relation suivante :

$$D = \frac{\Delta\varphi}{4\pi} \times \frac{C}{\left(\Delta F + B\dfrac{Tf}{T}\right)}$$

   - C représentant la vitesse de la lumière ;
   - B représentant la bande de fréquence de modulation ;
   - T représentant la période de répétition des rampes ;
   - $\Delta F$ représentant la variation de fréquence entre les rampes ;
   - Tf représentant la durée au bout de laquelle la fréquence commute d'une rampe à l'autre ;
   - $\Delta\varphi$ représentant la mesure de la différence des phases entre les signaux reçus correspondant aux deux rampes séparées de $\Delta F$.

3. Procédé selon l'une quelconque des revendications précédentes, **caractérisé en ce qu'**une séquence de doubles rampes montantes de modulation commutées alternativement et une séquence de doubles rampes descendantes de modulation commutées alternativement sont émises et espacées de la même variation de fréquence ($\Delta F$), des zones réduites (43, 45, 53, 56) sur chaque droite d'ambiguïté (41, 42 ,52, 55) étant sélectionnées pour chaque sens de pentes autour de la distance estimée (44, 46, 51, 54) , la distance et la vitesse étant déterminées dans la plan Distance-Vitesse par l'intersection des zones sélectionnées de la droite d'ambiguïté (41, 42) correspondant à la rampe montante et de la droite d'ambiguïté correspondant à la rampe descendante.

4. Procédé selon l'une quelconque des revendications précédentes, **caractérisé en ce que** le radar émettant un nombre donné N de rampes de modulation de fréquence commutées décalées en fréquence les unes par rapport aux autres, deux signaux composites sont formés par combinaisons linéaires distinctes des signaux reçus associés aux N rampes, l'estimation de distance étant déduite de la différence de phase entre les deux signaux composites.

5. Procédé selon l'une quelconque des revendications précédentes, **caractérisé en ce que** deux groupes de rampes de fréquences de pentes opposées sont émises, la distance de la cible étant obtenue par une relation logique de type "ou" entre les détections élémentaires obtenues à l'issue des deux groupes.

6. Dispositif pour la mise en oeuvre du procédé selon l'une quelconque des revendications précédentes, **caractérisé en ce qu'**il comporte au moins :

   - un générateur de rampes de fréquences (63) ;
   - un premier mélangeur (64) dont une entrée est reliée à la sortie du générateur de rampes (63) et l'autre entrée est reliée à la sortie d'un générateur de fréquence (62) délivrant la variation de fréquence ($\Delta F$) et une fréquence nulle alternativement chacune pendant une durée donnée (Tf) de façon à ce que la sortie du mélangeur délivre une double rampe commutée ;
   - un deuxième mélangeur (70) dont une entrée est reliée à la sortie du premier mélangeur et l'autre entrée reçoit le signal de réception ;
   - des moyens (61) de sélection temporelle et de démultiplexage dont l'entrée est reliée à la sortie du deuxième mélangeur (70), aiguillant le signal reçu alternativement vers deux voies de telle sorte que le signal reçu provenant de la première rampe soit appliqué à une première voie (71) et que le signal reçu provenant de la seconde rampe décalée de la variation de fréquence (ΔF) soit appliqué à la seconde voie (72)

- des moyens (73) d'extraction et de levée d'ambiguïté entre la distance et la vitesse, ces moyens (73) déterminant la phase différentielle (Δφ) entre les signaux reçus sur chaque voie pour calculer la distance et la vitesse de la cible détectée correspondant au signal reçu.

**7.** Dispositif selon la revendication 6, **caractérisé en ce que** la première voie comporte des moyens de retard (68) du signal reçu.

**8.** Dispositif selon l'une quelconque des revendications 6 ou 7, **caractérisé en ce que** les voies comportent des filtres (67,69).

**9.** Dispositif selon l'une quelconque des revendications précédentes, **caractérisé en ce qu'**il comporte un circulateur (65) dont une entrée est reliée à la sortie du premier mélangeur (64), une sortie est reliée à une entrée du deuxième mélangeur (70) et dont l'autre entrée/sortie est reliée à des moyens d'émission et de réception.

**Patentansprüche**

**1.** Radarerfassungsverfahren mit Dauerstrich-Frequenzmodulation, das eine Aufhebung der Mehrdeutigkeit zwischen der Entfernung und der Geschwindigkeit erlaubt, **dadurch gekennzeichnet, dass** das Radargerät mindestens abwechselnd zwei parallele und diskontinuierliche Frequenzmodulationsrampen (32, 33) aussendet, deren Frequenzen geringfügig um einen Frequenzabstand (ΔF) versetzt sind, wobei die Frequenz nach einer gegebenen Zeitdauer (Tf) von einer Rampe zur anderen umschaltet, wobei die Entfernung (44, 46) eines erfassten Zielobjekts in Abhängigkeit von der Phasendifferenz (Δφ) zwischen einem empfangenen Signal ($S_1(t)$) entsprechend der ersten Rampe (32) und einem empfangenen Signal ($S_2(t)$) entsprechend der zweiten Rampe (33) geschätzt wird, und wobei die Geschwindigkeit des Zielobjekts ausgehend von der geschätzten Entfernung (44, 46) und der dem Zielobjekt zugeordneten Mehrdeutigkeitsgeraden (41, 42) erhalten wird.

**2.** Verfahren nach Anspruch 1, **dadurch gekennzeichnet, dass** die geschätzte Entfernung D (44, 46) durch die folgende Beziehung gegeben ist:

$$D = \frac{\Delta\varphi}{4\pi} \times \frac{C}{\left(\Delta F + B\,\dfrac{Tf}{T}\right)}$$

wobei:

- C die Lichtgeschwindigkeit bedeutet;
- B den Frequenzmodulationsbereich bedeutet;
- T die Wiederholperiode der Rampen bedeutet;
- ΔF den Frequenzabstand zwischen den Rampen bedeutet;
- Tf die Zeitdauer bedeutet, nach der die Frequenz von einer Rampe zur anderen umschaltet;
- Δφ das Maß der Phasendifferenz zwischen den empfangenen Signalen bedeutet, die den beiden um ΔF getrennten Rampen entsprechen.

**3.** Verfahren nach einem der vorhergehenden Ansprüche, **dadurch gekennzeichnet, dass** eine Folge von doppelten ansteigenden Modulationsrampen, die abwechselnd umgeschaltet werden, und eine Folge von doppelten abfallenden Modulationsrampen, die abwechselnd umgeschaltet werden, gesendet werden und den gleichen Frequenzabstand (ΔF) aufweisen, wobei reduzierte Zonen (43, 45, 53, 56) auf jeder Mehrdeutigkeitsgeraden (41, 42, 52, 55) für jede Steigungsrichtung um die geschätzte Entfernung (44, 46, 51, 54) herum ausgewählt werden, und wobei die Entfernung und die Geschwindigkeit in der Entfernungs-Geschwindigkeits-Ebene durch den Schnittpunkt der ausgewählten Zonen der Mehrdeutigkeitsgeraden (41, 42), die der ansteigenden Rampe entspricht, und der Mehrdeutigkeitsgeraden, die der abfallenden Rampe entspricht, bestimmt werden.

**4.** Verfahren nach einem der vorhergehenden Ansprüche, **dadurch gekennzeichnet, dass**, wenn das Radargerät eine gegebene Anzahl N von zueinander frequenzverschobenen umgeschalteten Frequenzmodulationsrampen aussendet, zwei zusammengesetzte Signale jeweils durch unterschiedliche lineare Kombinationen der den N Rampen zugeordneten empfangenen Signale gebildet werden, wobei die Entfernungsschätzung aus der Phasendifferenz zwischen den beiden zusammengesetzten Signalen abgeleitet wird.

**5.** Verfahren nach einem der vorhergehenden Ansprüche, **dadurch gekennzeichnet, dass** zwei Gruppen von Frequenzrampen mit entgegengesetzten Steigungen ausgesendet werden, wobei die Entfernung des Zielobjekts durch eine logische Beziehung vom Typ "ODER" zwischen den am Ende der beiden Gruppen erhaltenen Elementarerfassungen erhalten wird.

**6.** Vorrichtung zur Durchführung des Verfahrens nach einem der vorhergehenden Ansprüche, **dadurch gekennzeichnet, dass** sie mindestens aufweist:

- einen Generator zur Erzeugung von Frequenzrampen (63);
- eine erste Mischstufe (64), deren einer Eingang mit dem Ausgang des Rampengenerators (63) und deren anderer Eingang mit dem Ausgang eines Frequenzgenerators (62) verbunden ist, der abwechselnd den Frequenzabstand ($\Delta$F) und eine Frequenz Null jeweils während einer gegebenen Zeitdauer (Tf) liefert, so dass der Ausgang der Mischstufe eine umgeschaltete doppelte Rampe liefert;
- eine zweite Mischstufe (70), deren einer Eingang mit dem Ausgang der ersten Mischstufe verbunden ist und deren anderer Eingang das Empfangssignal empfängt;
- Zeitauswahl- und Demultiplexiermittel (61), deren Eingang mit dem Ausgang der zweiten Mischstufe (70) verbunden ist, die das empfangene Signal abwechselnd zu einem von zwei Kanälen leiten, derart, dass das von der ersten Rampe kommende, empfangene Signal an einen ersten Kanal (71) angelegt wird und das von der zweiten Rampe kommende um den Frequenzabstand ($\Delta$F) versetzte empfangene Signal an den zweiten Kanal (72) angelegt wird,
- Mittel (73) zum Extrahieren und zum Aufheben der Mehrdeutigkeit zwischen der Entfernung und der Geschwindigkeit, wobei diese Mittel die Phasendifferenz ($\Delta\varphi$) zwischen den auf jedem Kanal empfangenen Signalen bestimmt, um die Entfernung und die Geschwindigkeit des erfassten Zielobjekts entsprechend dem empfangenen Signal zu berechnen.

**7.** Vorrichtung nach Anspruch 6, **dadurch gekennzeichnet, dass** der erste Kanal Verzögerungsmittel (68) für das empfangene Signal aufweist.

**8.** Vorrichtung nach Anspruch 6 oder 7, **dadurch gekennzeichnet, dass** die Kanäle Filter (67, 69) aufweisen.

**9.** Vorrichtung nach einem der vorhergehenden Ansprüche, **dadurch gekennzeichnet, dass** sie einen Zirkulator (65) aufweist, von dem ein Eingang mit dem Ausgang der ersten Mischstufe (64), ein Ausgang mit einem Eingang der zweiten Mischstufe (70) und der andere Eingang/Ausgang mit Empfangsund Sendemitteln verbunden ist.

**Claims**

**1.** Method of frequency-modulated continuous-wave radar detection with removal of ambiguity between the distance and the speed, **characterized in that** the radar sends out at least alternately two parallel and discontinuous frequency modulation ramps (32, 33) that are slightly offset by a frequency variation ($\Delta$F), the frequency being switched from one ramp to the other at the end of a given duration (Tf), the distance (44, 46) from a detected target being estimated as a function of the difference in phase ($\Delta\varphi$) between a received signal ($S_1(t)$) corresponding to the first ramp (32) and a received signal ($S_2(t)$) corresponding to the second ramp (33), the speed of the target being obtained from the estimated distance (44, 46) and the ambiguity straight line (41, 42) associated with the target.

**2.** Method according to Claim 1, **characterized in that** the estimated distance D (44,46) is given by the following relationship:

$$D = \frac{\Delta\varphi}{4\pi} \times \frac{C}{\left(\Delta F + B\frac{Tf}{T}\right)}$$

- C representing the velocity of light;
- B representing the modulation frequency band;
- T representing the ramp repetition period;
- ΔF representing the frequency variation between the ramps;
- Tf representing the duration at the end of which the frequency is switched from one ramp to the other;
- Δφ representing the measurement of the difference in phases between the received signals corresponding to the two ramps separated by ΔF.

3. Method according any one of the preceding claims, **characterized in that** a sequence of double, alternately switched upward modulation ramps and a sequence of double, alternately switched downward modulation ramps are transmitted and spaced out by the same frequency variation (ΔF), limited zones (43,45,53,56) on each ambiguity straight line (41,42,52,55) being selected for each direction of slopes around the estimated distance (44,46,51,54), the distance and the speed being determed in the Distance-Speed plane by the intersection of the selected zones of the ambiguity straight line (41,42) corresponding to the upward ramp and the ambiguity straight line corresponding to the downward ramp.

4. Method according to ony one of the preceding claims, **characterized in that** the radar sending out a given number N of switched frequency modulation ramps offset in frequency with respect to one another, two composite signals are formed by distinct linear combinations of the received signals associated with the N ramps, the distance estimation being deduced from the difference in phase between the two composite signals.

5. Method according to any one of the preceding claims, **characterized in that** two groups of frequency ramps with opposite slopes are transmitted, the distance from the target being obtained by an "or" type logic relationship between the elementary detection values obtained at the end of the two groups.

6. Device for the implementation of the method according to any one of the preceding claims, **characterized in that** it comprises at least:

- a frequency ramp generator (63);
- a first mixer (64) having one input connected to the output of the ramp generator (63) and its other input connected to the output of a frequency generator (62) delivering the frequency variation (ΔF) and a zero frequency alternately each during a given duration (Tf) so that the output of the mixer delivers a switched double ramp;
- a second mixer (70) having one input connected to the output of the first mixer and its other input receiving the reception signal;
- temporal selection and demultiplexing means (61) whose input is connected to the output of the second mixer (70), routing the received signal alternately to the two channels in such a way that the received signal coming from the first ramp is applied to a first channel (71) and the received signal coming from the second ramp offset by the frequency variation (ΔF) is applied to the second channel (72)
- means (73) for the extraction and removal of ambiguity between distance and speed, these means (73) determining the differential phase (Δφ) between the signals received on each channel to compute the distance and the speed of the detected target corresponding to the received signal.

7. Device according to Claim 6, **characterized in that** the first channel comprises means (68) to delay the received signal.

8. Device according to either Claim 6 or 7, **characterized in that** the channels comprise filters (67,69)

9. Device according to any one of the preceding claims, **characterized in that** it comprises a circulator (65) that has one input connected to the output of the first mixer (64), one output connected to an input of the second mixer (70) and its other input/output connected to transmission and reception means.

FRÉQUENCE

B

1

$\dfrac{\tau.B}{T}$

0    τ         T         2T    TEMPS

# FIG.1

DISTANCE

24    23

24    21    23

25

22

25    27

26

VITESSE

# FIG.2

VARIATION
DE FRÉQUENCE

B

32

Tf Tf

31

ΔF

33

0 → TEMPS T

# FIG.3

DISTANCE

41

43

44

42

46

45

→ VITESSE RÉELLE

# FIG.4

FIG.5

FIG.6a

FIG.6b

16

FIG.7

EP 0 863 409 B1